# EUROPÄISCHE PATENTSCHRIFT

(11) **EP 3 753 010 B1**
(45) Veröffentlichungstag und Bekanntmachung des Hinweises auf die Patenterteilung: **12.01.2022**
(21) Anmeldenummer: 19704271.6
(22) Anmeldetag: 05.02.2019
(51) Int. Cl.: G10K 11/175, G10K 11/178, B60R 13/08, B60R 16/037, B60L 50/50

(54) **VERFAHREN ZUM KASCHIEREN EINES GERÄUSCHS EINES KRAFTFAHRZEUGS UND KRAFTFAHRZEUG**
METHOD FOR MASKING A NOISE OF A MOTOR VEHICLE, AND MOTOR VEHICLE
PROCÉDÉ DE MASQUAGE DU BRUIT D'UN VÉHICULE AUTOMOBILE ET VÉHICULE AUTOMOBILE

(30) Priorität: 16.02.2018 DE 102018202392
(43) Veröffentlichungstag der Anmeldung: 23.12.2020
(73) Patentinhaber: Audi AG, 85045 Ingolstadt (DE)
(72) Erfinder: GASS, Christoph, 85080 Gaimersheim (DE)
(86) Internationale Anmeldenummer: PCT/EP2019/052682
(87) Internationale Veröffentlichungsnummer: WO 2019/158387

(56) Entgegenhaltungen:
- DE-A1-102005 021 541
- DE-A1-102014 220 600
- DE-A1-102015 122 194
- KR-A- 20140 031 024
- US-A1- 2011 172 859
- US-A1- 2014 198 919

## Beschreibung

Die Erfindung betrifft ein Verfahren zum Kaschieren eines ersten Geräuschs, welches von einem Teil eines Kraftfahrzeugs unter einer bestimmten Auslösebedingung erzeugt wird, wobei zum Kaschieren des ersten Geräuschs das erste Geräusch durch mindestens ein zweites Geräusch überlagert wird.

Im Zusammenhang mit Kraftfahrzeugen sollen üblicherweise die Motorgeräusche im Innenraum gedämpft oder vollständig kompensiert werden. In diesem Zusammenhang beschreibt die US 6,912,286 B1 ein Active Noise Cancellation System, welches mittels Antischall die durch den Motor des Kraftfahrzeugs im Innenraum erzeugten Geräusche kompensieren soll. Weiterhin beschreibt auch die US 2010/0266135 A1 ein Active Noise Cancellation System für den Fahrzeuginnernaum. Hierbei soll zum einen für ein Elektrofahrzeug aktiv ein Motorengeräusch simuliert und ausgegeben werden, während gleichzeitig durch Gegenschall eine Dämpfung dieses im Außenbereich des Kraftfahrzeugs ausgegebenen Geräuschs im Innenraum des Kraftfahrzeugs erfolgen soll. Weiterhin offenbart die DE 10 2014 220600 A1 ein Verfahren zur akustischen Überdeckung von Betriebsgeräuschen in einem Kraftfahrzeug.

Aufgabe der vorliegenden Erfindung ist es, ein Verfahren und ein Kraftfahrzeug zum Kaschieren eines Geräuschs des Kraftfahrzeugs bereitzustellen, welche vorteilhafte weitere Anwendungsbereiche zum Kaschieren von Geräuschen aufzeigen.

Diese Aufgabe wird gelöst durch ein Verfahren und ein Kraftfahrzeug mit den Merkmalen gemäß den jeweiligen unabhängigen Ansprüchen. Vorteilhafte Ausgestaltungen der Erfindung sind Gegenstand der abhängigen Patentansprüche, der Beschreibung sowie der Figuren.

Bei einem erfindungsgemäßen Verfahren zum Kaschieren eines ersten Geräuschs, welches von einem Teil eines Kraftfahrzeugs unter einer bestimmten Auslösebedingung erzeugt wird, wird zum Kaschieren des ersten Geräuschs das erste Geräusch durch mindestens ein zweites Geräusch überlagert. Dabei wird das erste Geräusch durch ein Schließen zumindest eines Hauptschützes, welches einer Batterie des Kraftfahrzeugs zugeordnet ist, erzeugt.

Die Erfindung basiert dabei auf der Erkenntnis, dass es gerade in Elektrofahrzeugen beim Schalten von Schützen einer Hochvolt-Batterie zu einer besonders starken Lärmbelästigung durch das erzeugte Klacken im Innenraum des Kraftfahrzeugs kommen kann. Solche Hauptschütze koppeln dabei die jeweiligen Pole, das heißt den Pluspol und den Minuspol, der betreffenden Hochvolt-Batterie mit den entsprechenden Anschlüssen des Hochvoltbordnetzes des Kraftfahrzeugs. Aus Sicherheitsgründen werden diese Schütze im Stillstand des Kraftfahrzeugs, das heißt wenn dieses parkt und für längere Zeit abgestellt wird, insbesondere sobald die Zündung ausgeschaltet wird, geöffnet. Entsprechend werden die Hauptschütze in der Regel beim Betätigen bzw. Einschalten der Zündung durch einen Fahrer wieder geschlossen. Bisweilen wurde versucht, das durch das Schließen der Hauptschütze erzeugte laute Geräusch durch entsprechende Geräuschisolierungen zu verringern. Derartige Geräuschisolierungen sind jedoch sehr teuer. Die Erfindung ermöglicht es nun vorteilhafterweise, das durch das Schließen zumindest eines Hauptschützes, insbesondere auch beider Hauptschütze, entstehende erste Geräusch durch Überlagerung mit einem zweiten Geräusch zu kaschieren. Das Klacken beim Schließen der Hauptschütze ist dadurch für einen Fahrer damit zumindest deutlich weniger hörbar, wodurch durch das Kraftfahrzeug ein deutlich höherwertiges Klangbild vermittelt werden kann. Zudem sind hierfür auch keine teuren Geräuschisolierungen erforderlich. Dieses Kaschieren kann nun auf verschiedene Weise erfolgen.

Bei einer nicht-erfindungsgemäßen Ausführungsform stellt das mindestens eine zweite Geräusch ein vom ersten Geräusch komplementäres Geräusch dar, welches derart synchronisiert ausgegeben wird, dass sich das erste Geräusch und das mindestens eine zweite Geräusch zumindest an einer vorbestimmten Position im Innenraum des Kraftfahrzeugs zumindest zum Teil gegenseitig auslöschend überlagern. Mit anderen Worten kann also eine Kompensation, oder zumindest eine teilweise Kompensation, des ersten Geräuschs mittels Gegenschall beziehungsweise Active Noise Cancellation erfolgen. Der große Vorteil besteht darin, dass das durch Hauptschütze beim Schließen erzeugte Geräusch deutlich einfacher durch Gegenschall kompensierbar ist, als das beispielsweise mittels eines Kraftfahrzeugmotors erzeugte Geräusch. Dies ist dadurch bedingt, dass das beim Schließen der Hauptschütze erzeugte Geräusch immer nahezu gleich klingt, da der Zuschaltvorgang der Hauptschütze immer gleich abläuft. Es kann also auf einfache Weise ein Gegenpuls berechnet werden, dann zum Beispiel in einem Speicher des Kraftfahrzeugs gespeichert werden und dann zum zumindest teilweisen Auslöschen des ersten Geräuschs beim Schließen der Hauptschütze ausgegeben werden. Es sind also entsprechend keine Mikrofone erforderlich, die die Geräuschkulisse der Umgebung permanent erfassen, um damit in Echtzeit geeignete Gegenpulse zu berechnen. Hierdurch gestaltet sich das Kaschieren des ersten Geräuschs besonders einfach und kostengünstig.

In diesem Fall wird das erste Geräusch, welches also durch das Schließen des zumindest einen Hauptschützes erzeugt wird, ausgelöst, wenn die Zündung des Kraftfahrzeugs betätigt wird. Die Betätigung der Zündung des Kraftfahrzeugs kann somit ein Triggersignal für das Auslösen der Ausgabe des mindestens einen zweiten Geräuschs darstellen. Auch Latenzzeiten bis zum Schließen der Schütze können dabei berücksichtigt werden. Beispielsweise beträgt die Signallaufzeit vom Betätigungszeitpunkt der Zündung über den CAN-Bus zirka 10 Millisekunden. Diese Zeitverzögerung bis zum Schließen der Hauptschütze kann also ebenfalls bei der Ausgabe des zweiten Geräusches zum Kaschieren des ersten Geräusches berücksichtigt werden. Zur Ausgabe des zweiten Geräusches kann weiterhin mindestens ein Lautsprecher in dem Kraftfahrzeuginnenraum vorgesehen sein. Das Ergebnis der Kompensation ist dabei umso besser, je genauer die Position eines Insassen relativ zum Lautsprecher bekannt ist, da auch die Laufzeit von der Ausgabe des zweiten Geräuschs durch den Lautsprecher bis zum Ohr eines Insassen für eine möglichst ideale Kompensation berücksichtigt werden muss. Gerade jedoch, wenn sich mehrere Insassen in einem Kraftfahrzeug befinden, wird es schwierig, eine noch ausreichend gute Kompensation des ersten Geräuschs für alle Insassen in gleicher Weise zu bewerkstelligen.

Daher stellt es eine weitere vorteilhafte 2. nicht-erfindungsgemäße Ausgestaltung dar, wenn das mindestens eine zweite Geräusch durch mindestens einen Lautsprecher ausgegeben wird, der in einer Kopfstütze des Kraftfahrzeugs angeordnet ist. Insbesondere können dabei auch zwei Lautsprecher in einer jeweiligen Kopfstütze vorgesehen sein, sodass zumindest für eine Standardsitzposition eines Benutzers auf jeder Seite des Kopfes, insbesondere im Bereich der Ohren, ein Lautsprecher angeordnet ist. Dadurch ist die Laufzeit des vom Lautsprecher ausgegebenen zweiten Geräuschs vom Lautsprecher bis zum Ohr des Benutzers relativ kurz, was eine besonders präzise Kompensation des ersten Geräuschs erlaubt, da hierdurch die Ausgabe des komplementäre zweiten Geräuschs besonders gut auf die Kopfposition eines jeweiligen Insassen separat abgestimmt werden kann. Insbesondere können dabei entsprechende Lautsprecher in jeder Kopfstütze des Kraftfahrzeugs vorgesehen sein, sodass für alle Insassen des Kraftfahrzeugs eine hinreichend gute Kompensationsqualität bereitgestellt werden kann. Dies erlaubt es vorteilhafterweise, den Restschallpegel des ersten Geräuschs auf ein Minimum zu reduzieren.

Darüber hinaus kann die Ausgabe des zweiten Geräuschs, insbesondere des Gegenschalls, in Abhängigkeit von der Anzahl an im Innenraum des Kraftfahrzeugs detektierten Insassen getätigt werden, insbesondere in Abhängigkeit von deren Positionen. Wird also beispielsweise lediglich erfasst, dass sich eine Person auf dem Fahrersitz befindet, so kann sich die Ausgabe des Gegenschalls auch auf die im Fahrersitz angeordneten Lautsprecher, insbesondere in dessen Kopfstütze angeordneten Lautsprecher, beschränken. Ist beispielsweise zusätzlich auch ein Beifahrer vorhanden, so kann der Gegenschall auch durch die Lautsprecher, welche sich in dessen Kopfstütze befinden, ausgegeben werden. Gleiches gilt auch für Insassen auf der Rückbank des Kraftfahrzeugs. Welche der Sitzplätze im Kraftfahrzeug belegt sind, kann mittels einfacher Sensoren, zum Beispiel Drucksensoren, einer Innenraumkamera, Gurtsensoren, usw., erfasst werden.

Gemäß einer weiteren nicht-erfindungsgemäßen Ausführungsform wird als das mindestens eine zweite Geräusch ein Klang oder eine Klangfolge mit einer vorbestimmten Mindestlautstärke ausgegeben. So kann das erste Geräusch zwar nicht kompensiert werden, dafür jedoch mit einem angenehmeren Klang überdeckt werden. Dieser Klang oder die Klangfolge kann beispielsweise eine Erkennungsmelodie in Form eines Jingles des Kraftfahrzeugherstellers darstellen. Auch dadurch kann ein deutlich höherwertiges Klangbild des Kraftfahrzeugs an einen Benutzer vermittelt werden. Diese Maßnahme ist besonders effektiv und einfach, da sie lediglich das Abspielen eines Klangs oder einer Klangfolge erfordert, insbesondere mit einer bestimmten oder bestimmbaren Mindestslautstärke, die es ermöglicht, das erste Geräusch zumindest teilweise zu übertönen. Hierzu ist keine besondere Lautsprecherpositionierung oder die Kenntnis der Positionen der Insassen erforderlich. Auch muss hier keine spezielle Synchronisation mit dem ausgegebenen ersten Geräusch erfolgen. Sobald zum Beispiel die Zündung betätigt wird, kann das zweite Geräusch ausgegeben werden, unabhängig davon, dass gegebenenfalls bis zum Ertönen des ersten störenden Geräuschs noch eine kurze Zeit vergeht. Diverse Latenzzeiten bei der Signalübertragung können damit vernachlässigt werden. Diese Ausgestaltung ist damit auch deutlich kostengünstiger und einfacher in der Umsetzung. Darüber hinaus können die beiden beschriebenen Möglichkeiten auch miteinander in beliebiger Weise kombiniert werden. Beispielsweise kann sowohl ein zum ersten Geräusch komplementäres zweites Geräusch ausgegeben werden, um mittels Gegenschall dieses erste Geräusch so weit wie möglich zu kompensieren, während gleichzeitig ein drittes Geräusch in Form eines Klangs oder einer Klangfolge, wie beschrieben, ausgegeben wird, um den verbleibenden Restschallpegel des ersten Geräusches zu übertönen. Gerade durch die Kombination dieser beiden Maßnahmen wird es ermöglicht, das erste Geräusch für einen Benutzer so wenig wie möglich hörbar zu gestalten.

Weiterhin ist es vorteilhaft, wenn der Klang oder die Klangfolge für einen ersten Zeitraum ausgegeben wird, welcher größer ist als ein zweiter Zeitraum, für welchen das erste Geräusch erzeugt wird, und wobei der ersten Zeitraum den zweiten Zeitraum umfasst. Dadurch kann vorteilhafterweise gewährleistet werden, dass das erste Geräusch vollständig vom ausgegebenen Klang beziehungsweise der Klangfolge überdeckt wird.

Gemäß einer Ausführungsform der Erfindung stellt die bestimmte Auslösebedingung die Initiierung eines Entriegelungsvorgangs zum Entriegeln von Türen des Kraftfahrzeugs dar, wobei das mindestens eine zweite Geräusch ein beim Entriegelungsvorgang entstehendes Entriegelungsgeräusch darstellt. Mit anderen Worten kann also das Schließen der Schütze nicht erst mit dem Betätigen der Zündung ausgelöst werden, sondern bereits vorher beim Entriegeln des Kraftfahrzeugs, zum Beispiel mittels einer Zentralverriegelung. Durch eine solche Entriegelungseinrichtung des Kraftfahrzeugs wird ohnehin ein Geräusch erzeugt. Dieses kann durch die Synchronisation dieser beiden Vorgänge nun vorteilhafterweise genutzt werden, um das beim Schließen der Schütze erzeugte Geräusch zu überlagern und dadurch für einen Benutzer weniger hörbar zu machen. Dadurch kann es vorteilhafterweise bewerkstelligt werden, dass dann letztendlich, wenn sich der Benutzer im Innenraum des Kraftfahrzeugs befindet und die Zündung des Kraftfahrzeugs betätigt, überhaupt kein Geräusch beim Schließen der Schütze mehr ausgegeben wird, da die Schütze bereits in dieser Situation geschlossen sind.

Auch diese Ausführungsform kann wiederum in beliebiger Weise mit den zuvor beschriebenen Ausführungsformen kombiniert werden. Dies wird nachfolgend noch näher erläutert.

Dabei ist es weiterhin vorteilhaft, dass für den Fall, dass nach einer vorbestimmbaren Zeit keine Betätigung einer Zündung durch einen Benutzer erfolgt ist, der mindestens eine Hauptschütz automatisch geöffnet wird. Entriegelt ein Benutzer beispielsweise das Kraftfahrzeug und überlegt es sich danach jedoch anders, steigt also nicht in das Kraftfahrzeug ein oder betätigt die Zündung, so können vorteilhafterweise die Hauptschütze wieder nach Ablauf einer vorbestimmbaren Zeitdauer geöffnet werden. Damit kann vorteilhafterweise sichergestellt werden, dass im inaktiven Zustand des Kraftfahrzeugs die Hauptschütze nicht permanent geschlossen bleiben, wodurch die Sicherheit deutlich erhöht werden kann. Sollte es dennoch passieren, dass ein Benutzer die Türen entriegelt und jedoch erst nach Ablauf dieser vorbestimmbaren Zeit die Zündung betätigt, wenn also bereits die Hauptschütze wieder geöffnet sind, so kann zum Kaschieren des Geräuschs, welches beim Schließen der Hauptschütze erzeugt wird, auf die bereits beschriebenen Maßnahmen zurückgegriffen werden.

Daher ist es gemäß einer weiteren vorteilhaften nicht-erfindungsgemäßen Ausführungsform vorgesehen, dass, für den Fall, dass sich der mindestens eine Hauptschütz im geöffneten Zustand befindet und eine Zündung des Kraftfahrzeugs betätigt wird, das zum ersten Geräusch komplementäre Geräusch ausgegeben wird und/oder der Klang oder die Klangfolge ausgegeben werden. Damit kann also in jeder Situation eine optimale Kaschierung des ersten Geräuschs bewerkstelligt werden.

Besonders vorteilhaft ist es weiterhin, wenn auch das Öffnen der Hauptschütze nach Ablauf der vorbestimmbaren Zeit mit einem automatischen Verriegelungsvorgang zum Verriegeln der Türen des Kraftfahrzeugs korreliert ist. Beispielsweise kann es vorgesehen sein, dass die Zentralverriegelung nach Betätigung die Türen des Kraftfahrzeugs entriegelt. Weiterhin kann durch die Zentralverriegelung aber auch eine automatische Verriegelung der Türen erfolgen, zum Beispiel nach Ablauf einer vorbestimmten Zeit. Wenn nach Ablauf dieser Zeit die Zentralverriegelung das Kraftfahrzeug wieder automatisch verriegelt, können damit einhergehend auch die Schütze wieder geöffnet werden. Dieses Öffnen der Schütze kann darüber hinaus an weitere Bedingungen geknüpft sein, die sicherstellen sollen, dass ein Öffnen der Schütze während der Fahrt vermieden wird. Beispielsweise kann ein Öffnen der Schütze, welches mit dem Verriegelungsvorgang des Kraftfahrzeugs korreliert ist, nur dann erlaubt sein, wenn das Kraftfahrzeug sich im Stillstand befindet und/oder kein Insasse innerhalb des Kraftfahrzeugs detektiert wurde und/oder die Zündung des Kraftfahrzeugs abgeschaltet ist. Darüber hinaus können auch zahlreiche weitere Bedingungen vorgesehen sein. Dies verhindert vorteilhafterweise das Öffnen der Schütze in Situationen, in welchen dies nicht erwünscht ist.

Des Weiteren betrifft die Erfindung auch ein Kraftfahrzeug zum Kaschieren eines ersten Geräuschs, welches von einem Teil des Kraftfahrzeugs unter einer bestimmten Auslösebedingung erzeugbar ist, wobei das Kraftfahrzeug dazu ausgelegt ist, zum Kaschieren des ersten Geräuschs das erste Geräusch durch mindestens ein zweites Geräusch zu überlagern. Darüber hinaus ist das Kraftfahrzeug dazu ausgelegt, das erste Geräusch durch ein Schließen zumindest eines Hauptschützes, welcher einer Batterie des Kraftfahrzeugs zugeordnet ist, zu erzeugen.

Die für das erfindungsgemäße Verfahren und seine Ausgestaltungen genannten Vorteile gelten in gleicher Weise für das erfindungsgemäße Kraftfahrzeug.

Die Erfindung umfasst auch die Kombinationen der beschriebenen erfindungsgemäßen und nicht-erfindungsgemäßen Ausführungsformen.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

Im Folgenden sind erfindungsgemäße und nicht-erfindungsgemäße Ausführungsbeispiele beschrieben. Hierzu zeigt:
- Fig. 1: eine schematische Darstellung eines Kraftfahrzeugs zum Kaschieren eines Geräuschs gemäß einem Ausführungsbeispiel der Erfindung;
- Fig. 2: ein Ablaufdiagramm zur Veranschaulichung eines Verfahrens zum Kaschieren eines Geräuschs gemäß einem Ausführungsbeispiel ; und
- Fig. 3: ein Ablaufdiagramm zur Veranschaulichung eines Verfahrens zum Kaschieren eines Geräuschs gemäß einem weiteren Ausführungsbeispiel .

Bei den im Folgenden erläuterten Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

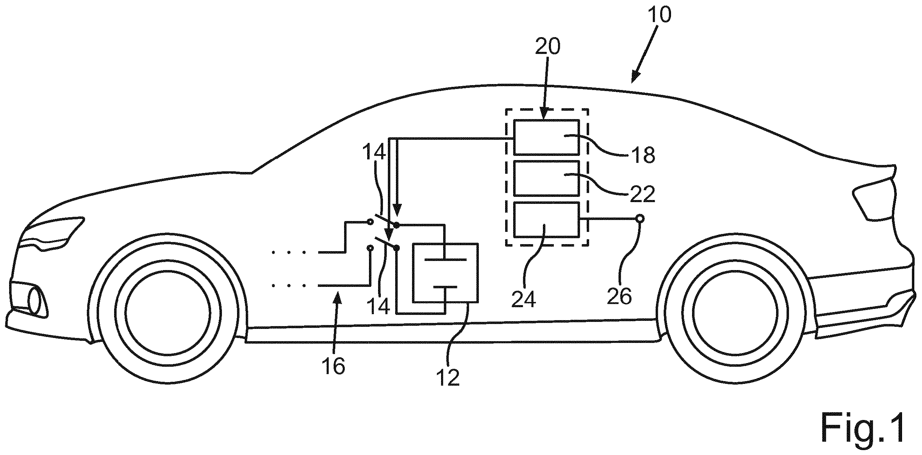

Fig. 1 zeigt eine schematische Darstellung eines Kraftfahrzeugs 10 zum Kaschieren eines Geräuschs gemäß einem Ausführungsbeispiel der Erfindung. Das Kraftfahrzeug 10 weist eine Kraftfahrzeugbatterie 12 auf, welche beispielsweise als Hochvolt-Batterie ausgebildet sein kann. Diese Batterie 12 ist über Hauptschütze 14 mit einem Bordnetz 16 des Kraftfahrzeugs 10 koppelbar und von diesem entkoppelbar. Zur Ansteuerung dieser Hauptschütze 14 ist eine Steuereinrichtung 18 vorgesehen, die zum Beispiel Teil einer Steuerungseinheit 20 sein kann, welche weitere Steuereinrichtungen umfassen kann. Diese Steuerungseinheit 20 kann beispielsweise auch eine Zentralverriegelung 22 umfassen, die dazu ausgelegt ist, in Abhängigkeit von einem Ver- oder Entriegelungssignal die Türen des Kraftfahrzeugs entsprechend anzusteuern, um diese zu verriegeln beziehungsweise zu entriegeln. Des Weiteren kann die Steuerungseinheit 20 auch eine Steuerungseinrichtung 24 zur Ansteuerung zumindest eines Lautsprechers 26 des Kraftfahrzeugs 10 aufweisen.

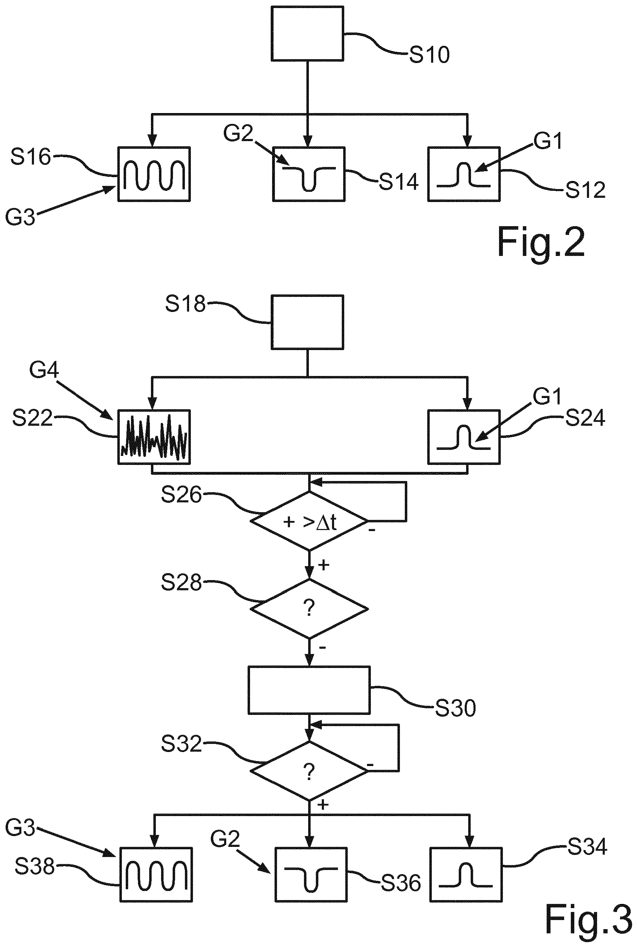

Beim Schließen der Hauptschütze 14 entsteht ein Geräusch, welches nun vorteilhafterweise durch verschiedene Maßnahmen kaschiert werden kann. Wird beispielsweise die Zündung des Kraftfahrzeugs 10 betätigt, so steuert die Steuereinrichtung 18 die Hauptschütze 14 an, um diese zu schließen. Gleichzeitig kann auch die weitere Steuereinrichtung 24 den mindestens einen Lautsprecher 26 ansteuern, um ein zu diesem beim Schließen der Hauptschütze 14 erzeugten ersten Geräusch komplementäres zweites Geräusch auszugeben, insbesondere in Form von Gegenschall, um das erste Geräusch, welches durch das Schließen der Schütze 14 erzeugt wird, zumindest zum Teil zu kompensieren. Dabei ist die Ausgabe dieses zweiten Geräuschs mit dem Schließvorgang der Schütze 14 synchronisiert, sodass das Schließen der Schütze 14 und die Ausgabe des zweiten Geräuschs durch den Lautsprecher 26 nahezu gleichzeitig erfolgen. Alternativ oder zusätzlich können durch den Lautsprecher 26, insbesondere wiederum durch geeignete Ansteuerung durch die Steuereinrichtung 24, ein Klang oder eine Klangfolge ausgegeben werden, welche das Geräusch des Schließens der Hauptschütze 24 übertönt. Hierzu ist keine Synchronisation mit dem Schließen der Schütze 14 notwendig, sodass das Ausgeben des Klangs beziehungsweise der Klangfolge durch den Lautsprecher 26 auch etwas früher erfolgen kann als das Schließen der Schütze 14. Auch in diesem Fall wird die Ausgabe des Klangs beziehungsweise der Klangfolge durch das Betätigen der Zündung des Kraftfahrzeugs 10, insbesondere durch das Einschalten der Zündung, ausgelöst. Bei Ausgestaltungen der Erfindung ist es vorgesehen, dass die Steuereinrichtung 18 zum Ansteuern der Schütze 14 ein Schließen der Schütze 14 bereits dann schon bewirkt, wenn durch die Zentralverriegelung 22 ein Signal zum Entriegeln des Kraftfahrzeugs 10 empfangen wurde. Daraufhin entriegelt die Zentralverriegelung 22 das Kraftfahrzeug 10 und währenddessen steuert die Steuereinrichtung 18 die Schütze 14 an, um diese zu schließen. Dadurch wird das Geräusch des Entriegelns der Türen mit dem Geräusch des Schließens der Schütze 14 überlagert, wodurch Letzteres ebenfalls nicht mehr so stark von einem Benutzer wahrgenommen wird. Diese Maßnahme zum Kaschieren des Geräuschs beim Schließen der Schütze 14 wird nun nochmal anhand von Fig. 2 und Fig. 3 erläutert.

Fig. 2 zeigt dabei ein Ablaufdiagramm zur Veranschaulichung eines nicht-erfindungsgemäßen Verfahrens zum Kaschieren eines Geräuschs gemäß einem Ausführungsbeispiel der Erfindung. Das Verfahren beginnt hierbei in Schritt S10, in welchem eine Betätigung der Zündung des Kraftfahrzeugs 10, insbesondere ein Aktivieren der Zündung, erfasst wird. Daraufhin steuert die Steuereinrichtung 18 die Hauptschütze 14 an, um diese zu schließen. Bei diesem Schließvorgang entsteht dabei ein erstes Geräusch G1. Um dieses zu kompensieren, wird in Schritt S14 während des Schließvorgangs der Schütze 14 gleichzeitig ein Gegenschallsignal G2 durch einen Lautsprecher 26 des Kraftfahrzeugs ausgegeben. Alternativ oder zusätzlich kann in Schritt S16 auch ein Klang oder eine Klangfolge G3 durch den Lautsprecher 26 des Kraftfahrzeugs 10 ausgegeben werden. Die Ausgabe dieses Klangs oder der Klangfolge G3 erfolgt dabei dergestalt, dass während dieser Klang beziehungsweise die Klangfolge ausgegeben werden, die Hauptschütze 14 geschlossen werden. Der Klang beziehungsweise die Klangfolge G3 können darüber hinaus auch noch länger ausgegeben werden. Auf diese Weise lässt sich das beim Schließen der Schütze 14 erzeugte Geräusch G1 auf besonders vorteilhafte und effektive Weise kaschieren.

Fig. 3 zeigt ein Ablaufdiagramm zur Veranschaulichung eines Verfahrens zum Kaschieren eines Geräuschs G1 gemäß einem Ausführungsbeispiel der Erfindung. Hierbei wird zunächst in Schritt S18 ein Entriegelungssignal von der Zentralverriegelungseinrichtung 22 empfangen. Daraufhin veranlasst die Zentralverriegelung 22 das Entriegeln des Kraftfahrzeugs 10 in (nicht-dargestellten) Schritt S20. Auch hierbei wird ein Geräusch G4 erzeugt, welches nun vorteilhafterweise ebenfalls zum Kaschieren verwendet werden kann. Entsprechend werden nach Empfang des Entriegelungssignals in Schritt S18 auch gleichzeitig die Hauptschütze 14 angesteuert, um diese in Schritt S24 zu schließen. Das Schließen der Hauptschütze 14 erfolgt also während des Entriegelungsvorgangs des Kraftfahrzeugs 10, sodass das durch den Entriegelungsvorgang erzeugte Geräusch G4 vorteilhafterweise das beim Schließen der Hauptschütze 14 erzeugte Geräusch G1 überlagert. Auch hierdurch wird das Schließgeräusch der Schütze 14 für einen Benutzer deutlich weniger wahrgenommen.

Weiterhin kann anschließend auch überprüft werden, ob bereits eine vorbestimmbare Zeitspanne Δt seit dem Schließen der Schütze 14 abgelaufen ist, ohne dass die Zündung des Kraftfahrzeugs 10 aktiviert wurde. Sollte der Benutzer nicht innerhalb einer definierbaren Zeit Δt die Zündung betätigen, so wird die HV-Batterie wieder vom Bordnetz durch Öffnen der Schütze getrennt und zum Beispiel über erneutes Aufsperren, d.h. bei erneuter Entriegelung des Kraftfahrzeugs 10, bei Betätigung der Klemme 15, also beim Aktivieren der Zündung, wieder zugeschaltet. Hierzu kann beispielsweise zunächst in Schritt 26 überprüft werden, ob diese vorbestimmte Zeit Δt bereits abgelaufen ist und wenn ja, kann in Schritt S28 überprüft werden, ob die Zündung des Kraftfahrzeugs 10 aktiviert ist beziehungsweise der Motor des Kraftfahrzeugs gestartet ist. Ist dies nicht der Fall, so werden in Schritt S30 die Hauptschütze 14 wieder geöffnet. Dies kann optional auch in Kombination mit dem Verriegelungsvorgang der Zentralverriegelung 22 erfolgen. Anschließend kann wiederum überprüft werden, ob die Zündung betätigt wurde. Wird in Schritt S32 festgestellt, dass nun die Zündung des Kraftfahrzeugs 10 aktiviert wurde, so werden die Schütze 14 in Schritt S34 wieder geschlossen, während in Schritt S36 synchronisiert ein komplementäres Geräusch G2 ausgegeben werden kann, und insbesondere auch währenddessen in Schritt S38 wiederum ein Klang oder eine Klangfolge G3 ausgegeben werden kann.

Insgesamt zeigen die Beispiele, wie durch die Erfindung ein Verfahren zum Kaschieren eines Geräuschs bereitgestellt wird, welches auf besonders kostengünstige, effektive und einfache Weise ermöglicht, das Geräusch beim Schließen der Hauptschütze der Kraftfahrzeugbatterie zu kaschieren.

## Patentansprüche

1. Verfahren zum Kaschieren eines ersten Geräuschs (G1), welches von einem Teil (14) eines Kraftfahrzeugs (10) unter einer bestimmten Auslösebedingung erzeugt wird, wobei zum Kaschieren des ersten Geräuschs (G1) das erste Geräusch durch mindestens ein zweites Geräusch (G2, G3, G4) überlagert wird, wobei das erste Geräusch (G1) durch ein Schließen zumindest eines Hauptschützes (14), welcher einer Batterie (12) des Kraftfahrzeugs (10) zugeordnet ist, erzeugt wird, **dadurch gekennzeichnet, dass** die bestimmte Auslösebedingung die Initiierung eines Entriegelungsvorgangs zum Entriegeln von Türen des Kraftfahrzeugs (10) darstellt, wobei das mindestens eine zweite Geräusch (G4) ein beim Entriegelungsvorgang durch eine Entriegelungseinrichtung erzeugtes Entriegelungsgeräusch (G4) darstellt.

2. Verfahren nach Anspruch 1,
**dadurch gekennzeichnet, dass**
für den Fall, dass nach einer vorbestimmbaren Zeit (Δt) keine Betätigung einer Zündung durch eine Benutzer erfolgt ist, der mindestens eine Hauptschütz (14) automatisch geöffnet wird.

3. Kraftfahrzeug (10) zum Kaschieren eines ersten Geräuschs (G1), welches von einem Teil (14) des Kraftfahrzeugs (10) unter einer bestimmten Auslösebedingung erzeugbar ist, wobei das Kraftfahrzeug (10) dazu ausgelegt ist, zum Kaschieren des ersten Geräuschs (G1) das erste Geräusch (G1) durch mindestens ein zweites Geräusch (G2, G3, G4) zu überlagern, wobei das Kraftfahrzeug (10) dazu ausgelegt ist, das erste Geräusch (G1) durch ein Schließen zumindest eines Hauptschützes (14), welcher einer Batterie (12) des Kraftfahrzeugs (10) zugeordnet ist, zu erzeugen, **dadurch gekennzeichnet, dass** die bestimmte Auslösebedingung die Initiierung eines Entriegelungsvorgangs zum Entriegeln von Türen des Kraftfahrzeugs (10) darstellt, wobei das mindestens eine zweite Geräusch (G4) ein beim Entriegelungsvorgang durch eine Entriegelungseinrichtung erzeugtes Entriegelungsgeräusch (G4) darstellt.

## Claims

1. Method for masking a first noise (G1) which is generated by a part (14) of a motor vehicle (10) under a certain triggering condition, wherein, to mask the first noise (G1), at least one second noise (G2, G3, G4) is superimposed on the first noise, wherein the first noise (G1) is generated by the closing of at least one main contactor (14) assigned to a battery (12) of the motor vehicle (10),
**characterised in that**
the certain triggering condition constitutes the initiation of an unlocking process for unlocking doors of the motor vehicle (10), wherein the at least one second noise (G4) constitutes an unlocking noise (G4) generated during the unlocking process by an unlocking apparatus.

2. Method according to claim 1,
**characterised in that**
the at least one main contactor (14) is automatically opened in the event that an ignition has not been actuated by a user after a predeterminable time (At).

3. Motor vehicle (10) for masking a first noise (G1) which can be generated by a part (14) of the motor vehicle (10) under a certain triggering condition, wherein the motor vehicle (10) is designed, in order to mask the first noise (G1), to superimpose at least one second noise (G2, G3, G4) on the first noise (G1),
wherein
the motor vehicle (10) is designed to generate the first noise (G1) by the closing of at least one main contactor (14) assigned to a battery (12) of the motor vehicle (10),
**characterised in that**
the certain triggering condition constitutes the initiation of an unlocking process for unlocking doors of the motor vehicle (10), wherein the at least one second noise (G4) constitutes an unlocking noise (G4) generated during the unlocking process by an unlocking apparatus.

## Revendications

1. Procédé de masquage d'un premier bruit (G1), lequel est généré par une partie (14) d'un véhicule automobile (10) dans une condition de déclenchement spécifique, dans lequel le premier bruit est superposé par au moins un second bruit (G2, G3, G4) pour le masquage du premier bruit (G1), dans lequel le premier bruit (G1) est généré par une fermeture d'au moins un contacteur principal (14), lequel est affecté à une batterie (12) du véhicule automobile (10), **caractérisé en ce que** la condition de déclenchement spécifique représente le lancement d'un processus de déverrouillage pour déverrouiller des portes du véhicule automobile (10), dans lequel l'au moins un second bruit (G4) représente un bruit de déverrouillage (G4) généré lors du processus de déverrouillage par un dispositif de déverrouillage.

2. Procédé selon la revendication 1, **caractérisé en ce que**, dans le cas où aucun actionnement d'un allumage par un utilisateur n'a eu lieu après un temps prédéterminable (Δt), l'au moins un contacteur principal (14) est automatiquement ouvert.

3. Véhicule automobile (10) pour le masquage d'un premier bruit (G1), lequel peut être généré par une partie (14) du véhicule automobile (10) dans une condition de déclenchement spécifique, dans lequel le véhicule automobile (10) est conçu pour superposer au moins un second bruit (G2, G3, G4) au premier bruit (G1) pour le masquage du premier bruit (G1), dans lequel le véhicule automobile (10) est conçu pour générer le premier bruit (G1) par une fermeture d'au moins un contacteur principal (14), lequel est affecté à une batterie (12) du véhicule automobile (10), **caractérisé en ce que** la condition de déclenchement spécifique représente le lancement d'un processus de déverrouillage pour déverrouiller des portes du véhicule automobile (10), dans lequel l'au moins un second bruit (G4) représente un bruit de déverrouillage (G4) généré lors du processus de déverrouillage par un dispositif de déverrouillage.
